# EUROPEAN PATENT APPLICATION

(11) **EP 2 717 400 A1**
(43) Date of publication of application: **09.04.2014**
(21) Application number: 11866241.0
(22) Date of filing: 14.10.2011
(51) Int. Cl.: H02G 3/22, B60R 16/02, H01B 17/58

(54) **GROMMET**

(30) Priority: 26.05.2011 JP 2011117815
(71) Applicant: Sumitomo Wiring Systems, Ltd., Yokkaichi-shi, Mie 510-0058 (JP)
(72) Inventor: HATTORI Hideki, Yokkaichi-shi Mie 510-0058 (JP); OKUHARA Takashi, Yokkaichi-shi Mie 510-0058 (JP)
(74) Representative: Takeuchi, Maya
(86) International application number: PCT/JP2011/073677
(87) International publication number: WO 2012/160723

(57) **Abstract**

An object is to improve sealing performance of a grommet. A grommet has a grommet main body and a pressing member. The grommet main body formed of an elastic material has a wire harness insertion portion through which the wire harness is inserted and a brim portion provided in an outer periphery of the wire harness insertion portion. The pressing member is configured to be attachable to the attachment plate in a state of being provided in the rear of the brim portion. The pressing member presses the brim portion against the attachment plate in a state of being attached to the attachment plate. A seal portion is provided in a portion of the brim portion opposite to the attachment plate. A recess is provided behind the seal portion of the brim portion.

## Description

### [Technical Field]

The present invention relates to a grommet used when a wire harness is inserted through a through-hole provided in an attachment plate.

### [Background Art]

A conventional grommet of this type is disclosed in Patent Literature 1. Patent Literature 1 discloses a rubber grommet that closes a cable opening and a retainer plate provided to an outer periphery of the grommet. The retainer plate is bolt-fixed to a body panel in a state where the grommet is placed between the retainer plate and the body panel. The retainer plate presses the outer periphery portion of the grommet against the body panel with fastening force of the bolt, and thus seals between the grommet and the body panel.

### [Citation List]

### [Patent Literature]

Patent Literature 1: Japanese Patent Laid-Open Publication No. 2000-85395

### [Summary of Invention]

### [Technical Problem]

However, due to production error or deformation in body panels, retainer plates, grommets, bolts and the like, a constant fastening amount is difficult to attain for the bolts. In a location where the fastening amount needs to be increased, a grommet is substantially compressed and deformed in the vicinity (fastening load also increases). This increases reaction force of the grommet in the vicinity of the bolt-fastening and fixing location, and thus deforms and warps a retainer plate in a portion away from the bolt-fastening and fixing location. Then, it is difficult to press the retainer plate against a body panel sufficiently in the portion away from the bolt-fastening and fixing location, and thus resulting in poor sealing performance.

In view of the above, an object of the present invention is to increase sealing performance of a grommet.

### [Solution to Problem]

In view of the circumstance above, a first aspect provides a grommet mounted on an attachment plate having a through-hole for insertion of a wire harness. The grommet has a grommet main body formed of an elastic material, the grommet main body including a wire harness insertion portion through which insert the wire harness is inserted and a brim portion provided in an outer periphery of the wire harness insertion portion and capable of being with one main surface of the attachment plate in an outer periphery of the through-hole, and a pressing member provided on a reverse side of a portion of the brim portion opposite to the one main surface of the attachment plate, the pressing member being attachable and fixable to the attachment plate and pressing the brim portion to the one main surface of the attachment plate in a state of being attached and fixated to the attachment plate. A seal portion extending in an extending direction of the brim portion is provided in the portion of the brim portion opposite to the one main surface of the attachment plate. A recess is provided behind the seal portion of the brim portion.

A second aspect provides the grommet according to the first aspect, in which an outer peripheral surface of the seal portion has a triangle shape in cross section and an apex of the seal portion is provided leaning toward the outer periphery of the brim portion.

A third aspect provides the grommet according to the second aspect, in which the recess has a triangle groove shape in cross section corresponding to the shape of the outer peripheral surface of the seal portion.

### [Advantageous Effects of Invention]

According to the first aspect, the recess is provided behind the seal portion of the brim portion. Thus, even when the seal portion is significantly compressed and deformed, reaction force associated therewith is small. This prevents deformation of the pressing member and further reliably maintains a state where the pressing member presses the entire brim portion. Thus, the sealing performance of the grommet can be improved.

According to the second aspect, the outer peripheral surface of the seal portion has a triangle shape in cross section and the apex thereof is provided leaning toward the outer periphery of the brim portion. When the brim portion is pressed against the attachment plate, the seal portion is compressed in a state where the apex of the seal portion is provided on the outer periphery side of the brim portion. Thus, seal performance is excellent.

According to the third aspect, the recess has a triangle groove shape in cross section corresponding to the shape of the outer peripheral surface of the seal portion. When the seal portion is compressed, the apex of the seal portion is further reliably provided on the outer periphery side of the brim portion. Thus, seal performance is further excellent.

### [Brief Description of Drawings]

[Fig. 1] A schematic perspective view illustrating a state where a grommet according to an embodiment is attached to an attachment plate.
[Fig. 2] A schematic cross-sectional view along II - II in Fig. 1.
[Fig. 3] A schematic cross-sectional view along III- III in Fig. 2.
[Fig. 4] A schematic cross-sectional view along III- III in Fig. 2.
[Fig. 5] A cross-sectional view illustrating a state where a brim portion and a seal portion are compressed and deformed.
[Fig. 6] A cross-sectional view illustrating a state where the brim portion, the seal portion, and other portions are compressed and deformed.

### [Description of Embodiments]

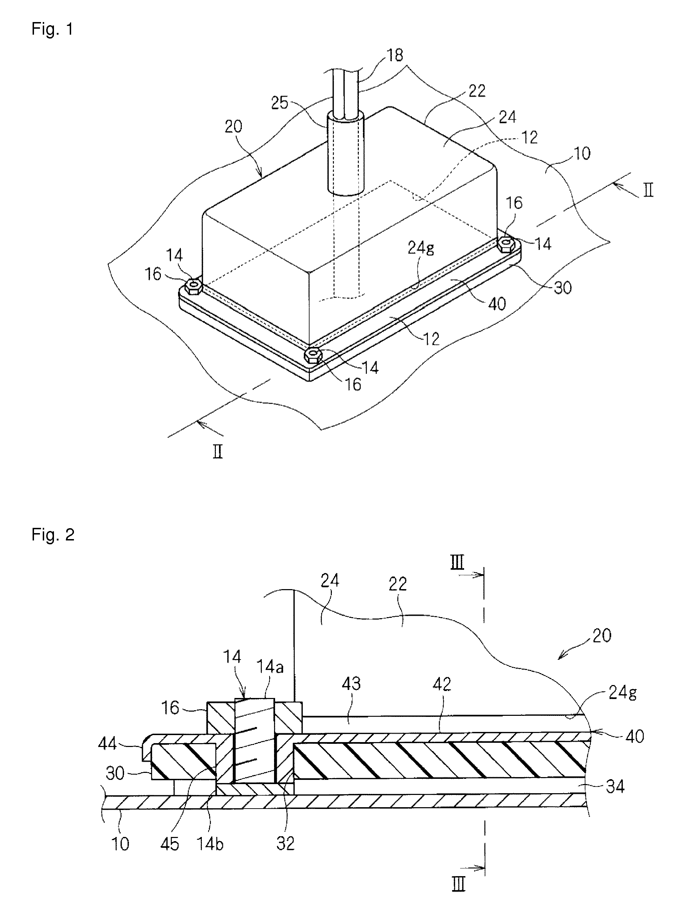

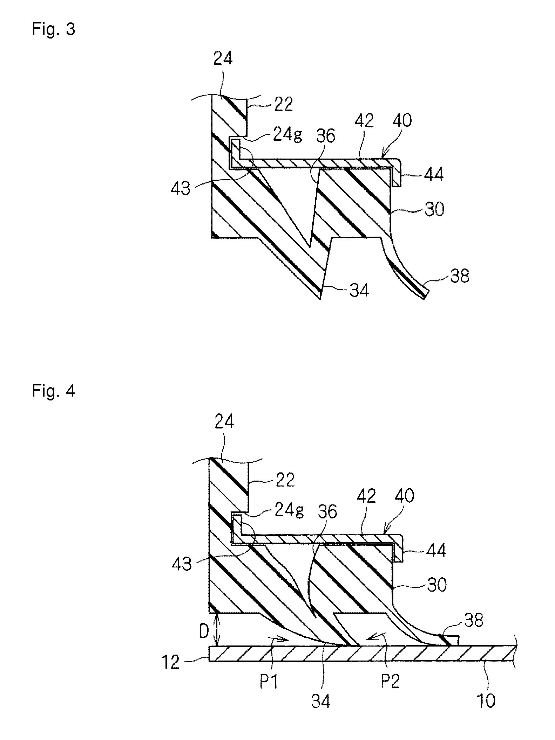

A grommet according to an embodiment is described below. Fig. 1 is a schematic perspective view illustrating a state where a grommet 20 according to the embodiment is attached to an attachment plate 10. Fig. 2 is a cross-sectional view along II - II in Fig. 1. Figs. 3 and 4 are each cross-sectional view along III- III in Fig. 2. Fig. 3 illustrates a state before the grommet 20 is attached, while Fig. 4 illustrates a state where the grommet is attached.

The grommet 20 is mounted on the attachment plate 10 having a through-hole 12.

The attachment plate 10 is a plate member that partitions a vehicle body, for example, an interior and exterior of a passenger cabin, and is formed of a metal or the like. The attachment plate 10 has the through-hole 12. The through-hole 12 has a rectangular shape herein, but may have another shape, including a circular shape. A wire harness 18 is inserted through the through-hole 12. The wire harness 18 is, for example, a wiring material that electrically connects a gear controller in an interior of a passenger cabin and a gear in an exterior of the passenger cabin (engine compartment). The wire harness 18 has at least one electric wire. Furthermore, a plurality of stud bolts 14 stand from one main surface of the attachment plate 10 around the through-hole 12 with intervals between the stud bolts 14. In the present embodiment, the stud bots 14 stand at positions outside corners of the rectangular through-hole 12. The stud bolt 14 has a screw 14a and a head 14b, the screw 14a having a thread in an outer periphery, the head 14b being provided in one end portion of the screw 14a and having a disc shape. The stud bolt 14 is fixated by welding or the like to the attachment plate 10 in a state where the head 14b is in contact with the one main surface of the attachment plate 10. The grommet 20 is mounted in the through-hole 12 in a state where the wire harness 18 is inserted and fixated to the grommet 20. Thus, the grommet 20 protects the wire harness 18 and prevents water from entering through the through-hole (i.e., waterproofing).

The grommet 20 has a grommet main body 22 and a pressing member 40.

The grommet main body 22, which is composed of an elastic elastomer (rubber or the like) material, has a wire harness insertion portion 24 and a brim portion 30.

The wire harness insertion portion 24 is configured to allow the wire harness 18 to be inserted therethrough and is expanded to a size to close and cover the through-hole 12. More specifically, the wire harness insertion portion 24 has a box shape having an opening corresponding to the through-hole 12, herein a parallelepiped shape having a rectangular opening corresponding to the through-hole12. A tubular portion 25 through which the wire harness 18 can be inserted is provided in a surface opposite to the opening in the wire harness insertion portion 24. The wire harness 18 is inserted through the tubular portion 25, and thus is provided through the through-hole 12. The wire harness 18 is preferably fixated to a predetermined position in the tubular portion 25. Furthermore, the tubular portion 25 is preferably fastened to the wire harness 18 with strong force so as to shield a portion between the wire harness 18 and the tubular portion 25 from water.

The brim portion 30 is provided in an outer periphery of the wire harness insertion portion 24 and is configured to be capable of coming into contact with the one main surface of the attachment plate 10 in an outer periphery of the through-hole 12. The brim portion 30 herein is provided in the outer periphery of substantially the rectangular opening in the wire harness insertion portion 24. The brim portion 30 is formed into a brim-shaped portion having substantially a constant thickness.

In the brim portion 30, bolt through-holes 32 are provided in positions corresponding to the stud bolts 14 (outer positions corresponding to the corners of the through-hole 12 herein; refer to Fig. 2).

In the brim portion 30, a portion opposite to the one main surface of the attachment plate 10 is substantially a flat surface, where a seal portion 34 is provided extending in an extending direction of the brim portion 30. In the present embodiment, the seal portion 34 is provided in the outer periphery of the through-hole 12 in substantially a rectangular annular shape that does not interfere with the stud bolts 14.

The seal portion 34 has a projecting triangle shape in cross section in a direction orthogonal to the extending direction thereof. Specifically, an outer peripheral surface of the seal portion 34 has a triangle shape in cross section. Of the cross-sectional triangle shape defined by the outer peripheral surface of the seal portion 34, an outer side is shorter than an inner side. In other words, an apex of the seal portion 34 is provided in a position leaning toward the outer periphery of the brim portion 30 from the center of a width direction of the seal portion 34.

In the brim portion 30, a portion on a reverse side of the surface opposite to the one main surface of the attachment plate 10 is also substantially a flat surface, where a recess 36 is provided in a position behind the seal portion 34. In the present embodiment, the recess 36 has a triangle groove shape in cross section corresponding to the shape of the outer peripheral surface of the seal portion 34. In particular, similar to the outer peripheral surface of the seal portion 34, an outer side is shorter than an inner side of the cross-sectional triangle shape defined by the inner peripheral surface of the recess 36, and an innermost apex of the recess 36 is provided in a position leaning toward the outer periphery of the brim portion 30 from the center of a width direction of the recess 36. In the present embodiment, the apex portion of the seal portion 34 is positioned closer to the outer periphery of the brim portion 30 than the innermost apex portion of the recess 36. The innermost apex portion of the recess 36 preferably has a depth that reaches inside the seal portion 34 of the brim portion 30, beyond the surface opposite to the one main surface of the attachment plate 10. However, this is not required.

In the brim portion 30, an auxiliary seal portion 38 having a skirt shape is provided in an outer peripheral portion of the surface opposite to the one main surface of the attachment plate 10. When the brim portion 30 is pressed against the one main surface of the attachment plate 10, the auxiliary seal portion 38 is pressed against the one main surface of the attachment portion 10 in the outer periphery of the seal portion 34.

The pressing member 40 is composed of a more rigid material than the grommet main body 22, such as, for example, a metal or the like. The pressing member 40 is provided on the reverse side of the portion opposite to the one main surface of the attachment plate 10 in the brim portion 30. The pressing member 40 is configured to be attachable and fixable to the attachment plate 10. In a state where the pressing member 40 is attached and fixated to the attachment plate 10, the brim portion 30 is pressed against the one main surface of the attachment plate 10.

Specifically, the pressing member 40 is a member engaged by punching and bending a metal plate and has a frame shape as a whole corresponding to the brim portion 30. More specifically, the pressing member 40 has a pressing main plate 42, an inner edge portion 43, and an outer peripheral edge portion 44. The pressing main plate 42 has a rectangular frame shape to press a rear surface of the brim portion 30. The inner edge portion 43 extends from an inner peripheral edge portion of the pressing main plate 42 along the outer peripheral portion of the wire harness insertion portion 24 of the grommet main body 22. The outer peripheral edge portion 44 extends from an outer peripheral edge portion of the pressing main plate 42 along the outer peripheral portion of the brim portion 30. In a state where the pressing main plate 42 is provided on the rear surface of the brim portion 30, the inner edge portion 43 is fitted into a groove 24g of the wire harness insertion portion 24, and the outer peripheral edge portion 44 is externally fitted to the outer peripheral portion of the brim portion 30. Thereby, the pressing member 40 is mounted on the grommet main body 22.

Annular bosses 45 project in the pressing member 40 in positions corresponding to the respective stud bolts 14 (bolt through-holes 32 in the brim portion 30). In the present embodiment, the bosses 45 project corresponding to four corner portions of the pressing member 40. The bosses 45 are provided inside the bolt through-holes 32 of the brim portion 30. The grommet 20 is provided over the attachment plate 10 such that the stud bolts 14 are inserted into the bosses 45. Then, front end portions of the bosses 45 are brought into contact with the heads 14b of the stud bolts 14. In this state, nuts 16 are fastened to the stud bolts 14, and then the pressing member 40 is attached and fixated to the attachment plate 10 in a state where the nuts 16 press the pressing member 40 against the attachment plate 10. In this attached and fixated state, the pressing member 40 presses the brim portion 30 against the one main surface of the attachment plate 10 around the through-hole 12.

Functions of the grommet 20 are described when the grommet 20 is attached to the attachment plate 10.

To attach the grommet to the attachment plate 10, the stud bolts 14 are first inserted through the bosses 45 such that the front end portions of the stud bolts 14 project from the brim portion 30 and the pressing member 40. When the nuts 16 are screwed and fastened to the stud bolts 14, the brim portion 30 is pressed toward the attachment plate 10 on the outer peripheral side of the through-hole 12, and the seal portion 34 and the auxiliary seal portion 38 are pressed against the one main surface of the attachment plate 10.

When the seal portion 34 is pressed against the one main surface of the attachment portion 10, the seal portion 34 is compressed and deformed in a state where the apex of the seal portion 34 collapses toward the outer periphery (refer to Fig. 4) since the apex of the seal portion 34 is positioned leaning toward the outer periphery of the brim portion 30 from the center of the width direction of the seal portion 34. In addition, the recess 36 is formed into a groove shape having a triangle shape in cross section corresponding to the shape of the outer peripheral surface of the seal portion 34. This further ensures that the seal portion 34 is compressed and deformed in a state where the apex of the seal portion 34 is positioned leaning toward the outer periphery.

When the seal portion 34 is pressed against the one main surface of the attachment plate 10, the brim portion 30 and the seal portion 34 are compressed and deformed between the pressing member 40 and the attachment plate 10 in such a way as to fill the recess 36. At this point, the height of the head 14b may vary due to a welding condition of the stud bolt 14 to the attachment plate 10. Furthermore, the attachment plate 10, the pressing member 40, or the grommet main body 22 may deform slightly. In this case, when the nut 16 is fastened with a predetermined fastening force such that the boss 44 is brought into contact with the head 14b, a distance may vary between the attachment plate 10 and the pressing member 40.

For example, the distance between the attachment plate 10 and the pressing member 40 is deemed as a predetermined D assumed by design. In this case, as shown in Fig. 4, the seal portion 34 is pressed against the attachment plate 10, and the brim portion 30 and the seal portion 34 are compressed and deformed in such a way as to fill the recess 36 to some extent.

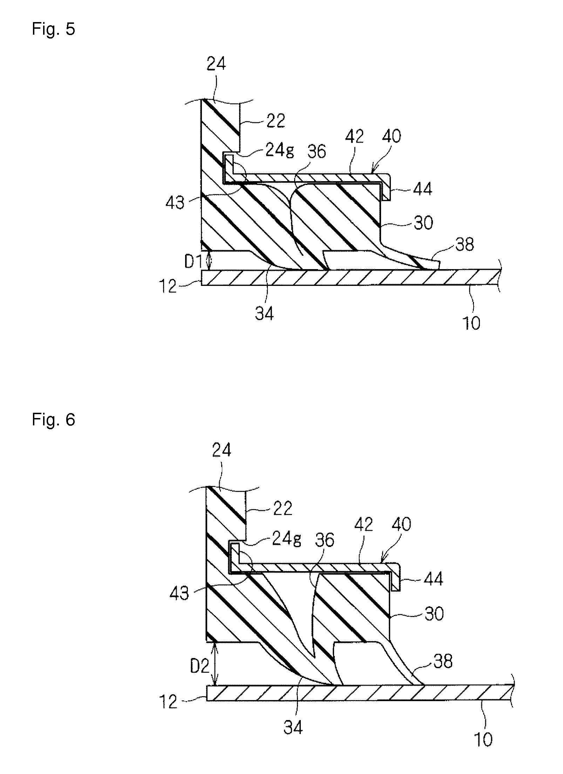

In contrast, when the distance between the attachment plate 10 and the pressing member 40 is a distance D1, which is shorter than the predetermined distance D assumed by design, a deformation amount of the seal portion 34 is greater, as shown in Fig. 5. In this case, the brim portion 30 and the seal portion 34 are compressed and deformed in such a way as to fill the recess 36. Compared to a case where the recess 36 is not provided, the brim portion 30 and the seal portion 34 are compressed and deformed relatively easily, and reaction force of the brim portion 30 and the seal portion 34 is small after the compression and deformation. Accordingly, the reaction force of the brim portion 30 and the seal portion 34 makes the pressing member 40 difficult to deform, and allows the pressing member 40 to press the brim portion 30 in the entire outer periphery with sufficient force, thus improving sealing performance. In addition, a situation can also be prevented where the stud bolt 14 is disengaged from the attachment 10 due to the reaction force of the seal portion 34.

When the distance between the attachment plate 10 and the pressing member 40 is the distance D2, which is longer than the predetermined distance D assumed by design, a deformation amount of the seal portion 34 is less, as shown in Fig. 6. However, the seal portion 34 is pressed against the one main surface of the attachment plate 10. Thus, even in this case, the seal performance is excellent.

According to the grommet 20 configured as above, the recess 36 is provided behind the seal portion 34 of the brim portion 30. Thus, the brim portion 30 and the seal portion 34 are compressed and deformed in such a way as to fill the recess 36. Accordingly, even when the seal portion 34 is significantly compressed and deformed, reaction force associated therewith is small. This prevents deformation of the pressing member 40 and further reliably maintains a state where the pressing member 40 presses the entire outer periphery of the brim portion 30 such that the seal portion 34 is in contact with the one main surface of the attachment plate 10. Thus, the sealing performance of the grommet 20 can be improved.

In addition, since the brim portion 30 and the seal portion 34 are compressed and deformed in such a way as to fill the recess 36, the seal portion 34 can be readily deformed, compared to a case where the recess 36 is not provided. Thus, fastening load of the nut 16 can be reduced.

Furthermore, the recess 36 provided behind the brim portion 30 can reduce the weight of the grommet 20.

The outer peripheral surface of the seal portion 34 has a triangle shape in cross section, whose apex is provided leaning toward the outer periphery of the brim portion 30. When the brim portion 30 is pressed against the attachment plate 10, the seal portion 34 is compressed in a state where the apex of the seal portion 34 is provided on the outer periphery side of the brim portion 30. The seal portion 34 compressed and deformed as above exhibits better waterproofing performance against water entering from the outer periphery side of the brim portion 30 (see an arrow P2) than from the inner periphery side of the brim portion 30 (see an arrow P1). Thus, the waterproof sealing performance is improved for water entering from outside of the grommet 20 between the grommet main body 22 and the attachment plate 10.

In addition, the apex of the seal portion 34 is provided leaning toward the outer periphery of the brim portion 30 along the entire extending direction. Thus, the seal portion 34 is compressed and deformed in a state where the apex portion is provided on the outer periphery side of the brim portion in the entire extending direction of the seal portion 34. In a hypothetical case where the apex of the seal portion 34 is provided on the outer periphery side and the inner periphery side, adherence between the seal portion 34 and the attachment portion 10 is decreased in a portion where the apex of the seal portion 34 switches between the outer periphery side and the inner periphery side of the brim portion 30, thus resulting in a portion with poor sealing performance. In contrast, in the present embodiment, the sealing portion 34 is compressed and deformed with the apex of the seal portion 34 provided leaning toward the outer periphery in the entire extending direction. This achieves good sealing performance in the entire extending direction of the brim portion 30 and the seal portion 34.

In addition, the recess 36 is also formed in a triangle groove shape in cross section that corresponds to the shape of the outer peripheral surface of the seal portion 34. Thus, when the seal portion 34 is compressed, the apex of the seal portion 34 is further reliably provided on the outer periphery side of the brim portion 30. This provides further excellence in the seal portion 34.

The seal portion 34 is not required to have the shape above and may have a projecting shape, including a semi-circular or rectangular shape in cross section. The shape of the recess 36 is not limited to the shape described in the embodiment above, and may be a groove having a semi-circular shape in cross section or a groove having a rectangular shape in cross section. Furthermore, the recess may be provided partially in the extending direction of the seal portion 34.

In addition, the opening of the grommet main body 22 and the pressing member 40 are not required to have a rectangular shape, and may have a circular shape or the like so as to match the shape of the through-hole 12.

The detailed description above of the present invention is presented merely as an example in all aspects and should not limit the present invention. Innumerable modifications not presented are construed to be assumed without deviating from the scope of the present invention.

## Claims

1. A grommet mounted on an attachment plate having a through-hole for insertion of a wire harness, the grommet comprising:
a grommet main body formed of an elastic material, the grommet main body comprising:
a wire harness insertion portion through which the wire harness is inserted; and
a brim portion provided in an outer periphery of the wire harness insertion portion and capable of being with one main surface of the attachment plate in an outer periphery of the through-hole; and
a pressing member provided on a reverse side of a portion of the brim portion opposite to the one main surface of the attachment plate, the pressing member being attachable and fixable to the attachment plate and pressing the brim portion to the one main surface of the attachment plate in a state of being attached and fixated to the attachment plate, wherein
a seal portion extending in an extending direction of the brim portion is provided in the portion of the brim portion opposite to the one main surface of the attachment plate, and
a recess is provided behind the seal portion of the brim portion.

2. The grommet according to claim 1, wherein an outer peripheral surface of the seal portion has a triangle shape in cross section and an apex of the seal portion is provided leaning toward the outer periphery of the brim portion.

3. The grommet according to claim 2, wherein the recess has a triangle groove shape in cross section corresponding to the shape of the outer peripheral surface of the seal portion.
